# EUROPEAN PATENT SPECIFICATION

(11) **EP 2 038 137 B1**
(45) Date of publication and mention of the grant of the patent: **04.08.2010**
(21) Application number: 07804536.6
(22) Date of filing: 26.06.2007
(51) Int. Cl.: B60K 15/04

(54) **A FUEL INTAKE ASSEMBLY FOR FILLING A VEHICLE TANK WITH DIESEL FUEL**
BRENNSTOFFEINLASSANORDNUNG ZUR FÜLLUNG EINES FAHRZEUGTANKS MIT DIESEL-BRENNSTOFF
ENSEMBLE D'ADMISSION DE CARBURANT POUR REMPLIR UN RESERVOIR DE CARBURANT D'UN VÉHICULE

(30) Priority: 07.07.2006 DE 102006031463
(43) Date of publication of application: 25.03.2009
(73) Proprietor: ITW Automotive Products GmbH & Co. KG, 58642 Iserlohn (DE)
(72) Inventor: CORREIRA, Gerald, 95320 Saint Leu La Forêt (FR); MINES, Andrew, Malden CM9 6WB (GB)
(74) Representative: Graalfs, Edo
(86) International application number: PCT/IB2007/001736
(87) International publication number: WO 2008/007179

(56) References cited:
- EP-A- 1 452 378
- EP-A- 1 555 154
- EP-A- 1 642 761

## Description

### TECHNICAL FIELD

The present invention relates to a fuel intake assembly to fill diesel fuel into a vehicle tank.

### BACKGROUND

The German patent document DE 10 2004 002 994 B3 discloses a fuel filling assembly of the above kind. Its purpose is to avert improper fuel filling. For that purpose an elastic, slotted actuation bush is used, which is fitted with an intake portion conically tapering toward the vehicle tank. The narrow cross-section is smaller than that of the diesel pump nozzle and is equal to or larger than the cross-section of a gasoline pump nozzle. At its end toward the tank, the actuation bush is fitted, at least on one gap side, with a drive segment. The actuation bush is mounted in floating manner at the jar-like housing. Also a closure mechanism is associated with the actuation bush end near the tank and is designed in a manner to act as a stop when the pump nozzle is inserted. The drive segment of the actuation bush acts on the closure mechanism, which thereby is moved from the closed into the open position when the diesel pump nozzle expands said bush and displaces the drive segment. In its closed position, the closure mechanism blocks in nearly sealing manner access to the tank. When a diesel fuel pump nozzle is inserted, the actuation bush expands and the closure mechanism is opened. If on the other hand a gasoline pump nozzle is inserted, the actuation bush shall remain unexpanded and the diesel pump nozzle abuts the closure mechanism, stopping it from deeper penetration. If the pump nozzle were operated nevertheless, the back pressure in said nozzle would automatically close a closure mechanism in the fuel pump nozzle.

The German patent document DE 103 07 355 B4 discloses an automobile fuel tank's filling pipe. It is fitted with a tank filling tub which can be configured in an aperture of the automobile's body. The bottom of the tank filling tub comprises an aperture pointing toward the filling pipe. A tubular housing respectively adapter portion faces the tank tub by its first end and is connected in sealed manner by its second end to the filling pipe. Said first end is fitted with a sealing lid supported in pivotable manner and prestressed by a spring into the closed position. Also said tank tub comprises a closing slider resting in linear or pivotable manner on the side opposite the filling pipe and being displaceable transversely to the aperture. The closing slider and a component affixed in the housing constitute a funnel in a way that when the end of a fuel pump nozzle is moved in or against the guide of the closing slider into an open position, the fuel pump nozzle thereby can be moved through the aperture. The purpose of this design is protection against significant external factors while simultaneously assuring comfortable handling of the fuel pump nozzle.

The document EP-A-1 555 154 discloses a fuel filling assembly according to the preamble of claim 1.

### SUMMARY

It is the objective of the present invention to create a fuel filling assembly allowing refilling a vehicle tank with diesel fuel and precluding improper fuel filling and simultaneously assuring that even in the event of considerable body damage due to impact, fuel may not leak out of the vehicle tank.

The above objective is achieved by the special features of claim 1.

In one embodiment mode of the present invention, a sliding sealing lid is displaceably supported along the bottom of the recess. A support plate is configured between the actuation bush and the sealing lid and is mounted within the jar-like housing which in turn rests by a flange on the recess bottom. The support plate assures that upon insertion of a fuel pump nozzle, the actuation bush shall apply an axial pressure in the direction of the recess and that said pressure shall not be transmitted to the sealing lid, as otherwise this sealing lid's actuation might be hampered or even prevented.

In another embodiment mode of the present invention, cooperating detent segments are configured at the tank tub and at the tubular adapter to allow joining these components in snap-in manner. Preferably polarizing elements are provided at said components being joined so that they may be mated only in one predetermined rotational position.

### BRIEF DESCRIPTION OF DRAWINGS

An illustrative embodiment mode of the present invention is elucidated below in relation to the appended drawings.

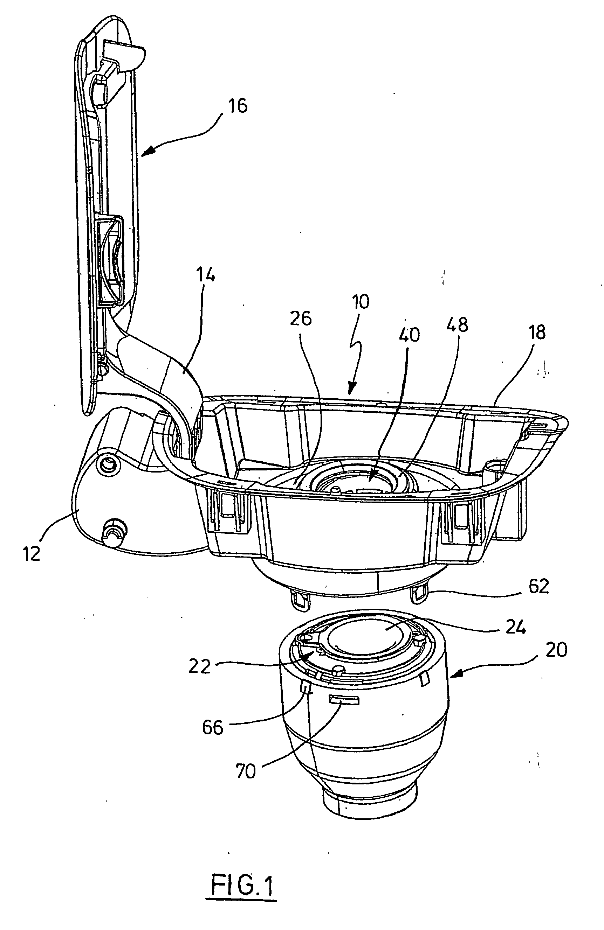

**Fig. 1** is a perspective of a fuel tank filling assembly of the invention having two separate sub-assemblies,
**Fig. 2** is similar to Fig. 1, however it shows cut-away elements of the fuel tank filling tub as seen obliquely from above,
**Fig. 3** is a perspective view obliquely from below of the sub-assemblies of Fig. 2,

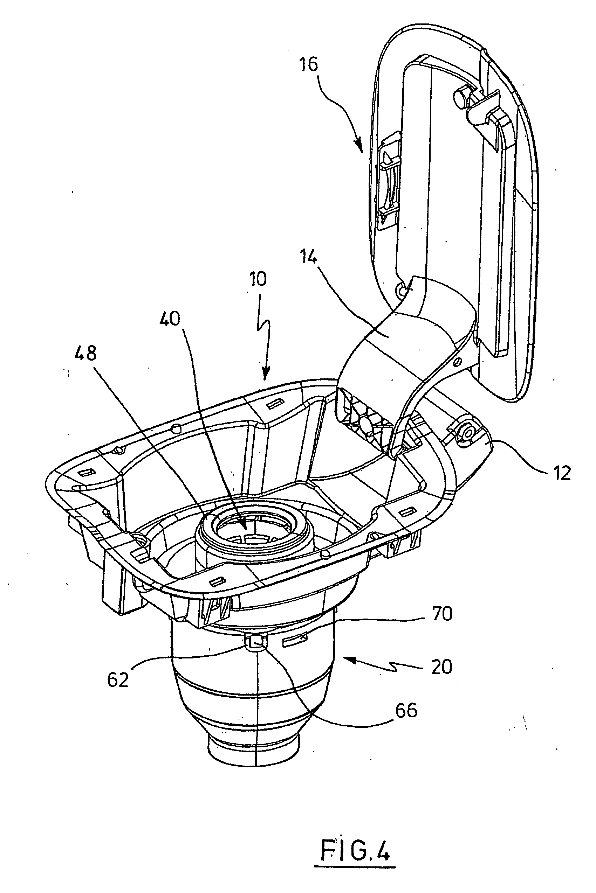

**Fig. 4** is a view obliquely from above of the sub-assemblies of Figs. 1 through 3 in their assembled state, and

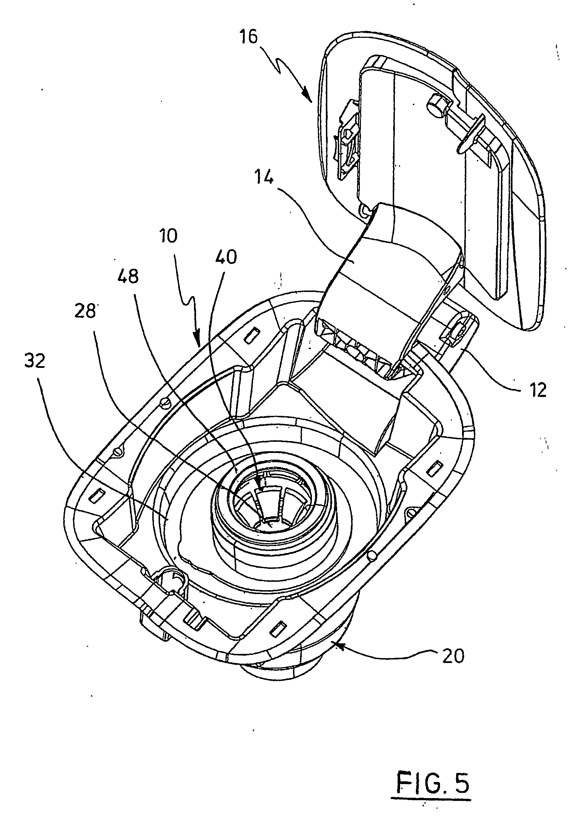

**Fig. 5** is a view from above of the assembly of Fig. 4.

### DETAILED DESCRIPTION OF EMBODIMENTS

The Figures show a fuel tank filling tub 10 supporting an arm 14 of a fuel tank cap 16 situated in a lateral extension 12. The fuel tank filling tub 10 is fitted with a peripheral, outwardly pointing rim 18. The fuel tank filling tub 10 is inserted into an omitted aperture of an omitted automobile body. On one side of the fuel filling tub 10 of the omitted automobile fuel tank, the Figures show a tubular adapter 20 which receives a housing 22 in turn receiving a pivoting lid 24 which is biased by an omitted spring into the closed position and which constitutes a sealing element. The lid 24 may be opened by the applied pressure from an omitted fuel pump nozzle. Such an adapter is known per se.

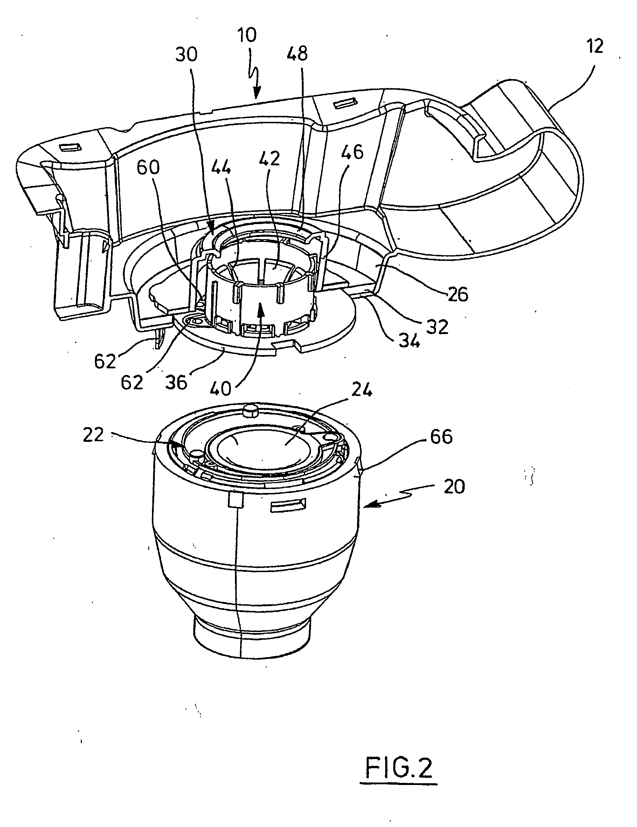

The fuel tank filling tub 10 comprises a circular recess 26 fitted with a hole 28. A jar-like housing 30 is mounted in said recess. Said housing is fitted with a circular, outward flange 32 inserted snugly into the recess 26 and resting on the bottom of the recess 26. A support plate 36 is configured on the bottom 34 of the recess 26 and is mounted in a clearance of the flange 32 and in this manner is laterally fixed in place. An actuation bush 40 rests on said support plate 36 and is fitted within it with a set of tabs 42 constituting a conical insertion zone for a fuel tank nozzle. The actuation bush 40 comprises a slot 44 running parallel to the bush axis and thereby allowing radial expansion when the tabs 42 are subjected to axial pressure. The basics of such actuation mechanisms already were disclosed in the above cited German patent DE 10 2004 002 994 B3. The actuation bush 40 is seated in the cylindrical portion 46 of the jar-like housing 30 which, in Fig. 2, by means of an inward-pointing rim 48, constitutes a limit on the actuation bush 40. The actuation bush 40 may move slightly both axially and transversely to the axis within the jar-like housing 30.

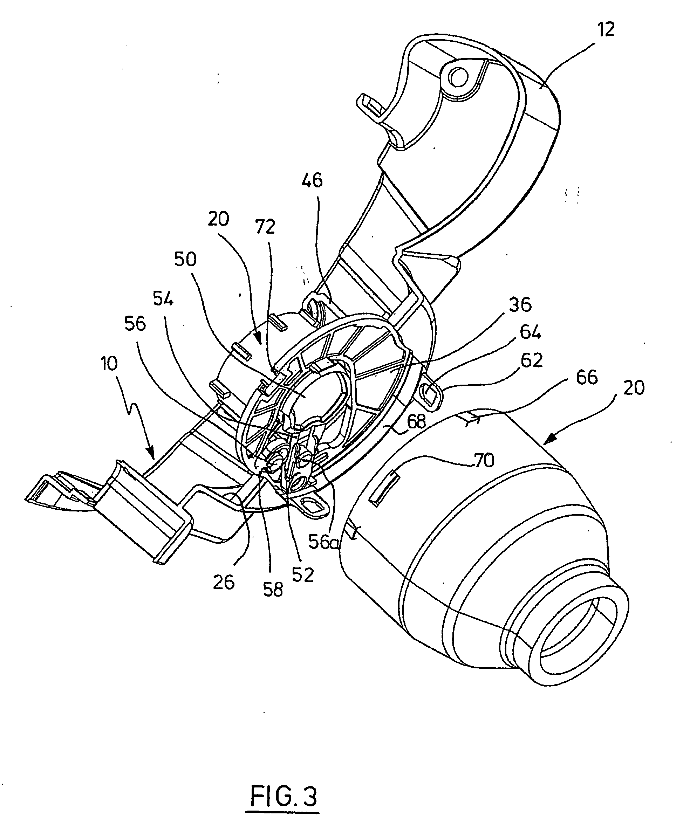

The bottom 34 of the recess 26 is omitted from Fig. 3. Fig. 3 does however show the support plate 36, furthermore a sealing lid 50 fitted with a lateral arm 52 pivotably supported at the bottom 34 of the recess 26 to pivot about an axis parallel to that of the jar-like housing 30. Said arm also comprises a longitudinal slot 54 engaged by a first pin 56a. A second pin 56 is mounted in an elongated slot 58 of the support plate 36. The pins 56, 56a are associated with lateral respectively radial lugs 60, 62 connected at each side of the slot 44 to the actuation bush 40. When the actuation bush 40 is expanded, the pin 56a pivots the arm 52 and hence the sealing lid 50, as a result of which a fuel pump nozzle may pass through the clearance 28 in the bottom 34 of the recess 26. Such an actuation principle is also discussed in the German patent document 10 2004 002 994 B3.

In the region of said recess, the fuel filling tub is fitted with lugs 62 pointing toward the adapter 20 and comprising an aperture 64. The tubular adapter 20 is fitted at its end facing the fuel filling tub 10 with peripheral detent beaks 66 entering the apertures 64 when the adapter 20 is mated to the fuel filling tub 10. In the zone of the recess 26, the fuel filling tub 10 is fitted with a downward-pointing rim 68 which is engaged by a portion of the tubular adapter 10. A polarizing beak 70 at the outer side of the tubular adapter 20 cooperates with a clearance 72 in the support plate 36 to allow mating these components in their predetermined relative rotational positions.

## Claims

1. A fuel filling assembly to fill diesel fuel into a vehicle tank, defined by the following features:
- a slotted actuation bush (40), made of a resilient material or being radially prestressed, and fitted with a gap running parallel to the bush axis, comprises an insertion portion conically tapering toward the vehicle's fuel tank, its narrow cross-section being less than the cross-section of a diesel fuel pump nozzle and equal to, or larger than the cross-section of a gasoline fuel pump nozzle,
- the actuation bush (40) is fitted at its end facing the fuel tank with a drive segment on at least one side of said gap,
- a jar-like housing (30) in which the actuation bush (40) is configured in floating manner, the outside diameter of the actuation bush in its relaxed state being less than the inside diameter of the jar-like housing,
- a fuel tank tub (10) which is integrally made of plastic and has a recess (26),
- a closure mechanism (50) is mounted at the actuation bush (40) end facing the fuel tank and is designed to constitute, in its closed position, a stop for an inserted fuel pump nozzle, and
- the drive segment of the actuation bush (40) engages the closure mechanism, whereby this closure mechanism is displaced out of the closed into the open position when the diesel fuel pump nozzle expands the actuation bush, the closure mechanism in its closed position closing the passage to said tank, **characterized in that** the actuation bush (40), the jar-like housing (30) and the closure mechanism (50) are configured in the recess (26) of the fuel tank tub (10), the closure mechanism (50) selectively blocking or releasing an aperture (28) in the recess (26), and **in that** the assembly comprises a tubular adapter (20) between the fuel tank tub (10) and a fuel tank filling pipe, wherein the tubular adapter (20) is fitted at its end facing said tub with a spring-loaded closing element (24) that shall be opened by means of a fuel pump nozzle.

2. Fuel tank filling assembly as claimed in claim 1, **characterized in that** a sliding sealing lid (50) rests on the bottom of the recess (26), that a support plate (36) rests on the bottom of the recess (26), the actuation bush (40) being configured between the support plate (36) and the bottom of the recess (26), the jar-like housing resting on the bottom of the recess (26).

3. Fuel tank filling assembly as claimed in claim 2, **characterized in that** the support plate (36) is affixed in a clearance of the flange (32) of the housing (30).

4. Fuel tank filling assembly as claimed in either of claims 2 and 3, **characterized in that** the flange (32) is snugly inserted into the recess (26).

5. Fuel tank filling assembly as claimed in one of claims 2 through 4, **characterized in that** said recess constitutes a cylindrical segment of the fuel filling tub (10) to receive the facing end of the tubular adapter (20).

6. Fuel tank filling assembly as claimed in one of claims 1 through 5, **characterized in that** polarizing elements (70, 72) are fitted on the adaptor (20) and the support plate (36) by means of which said adapter and support plate can be mated to each other in a predetermined relative rotational position.

7. Fuel tank filling assembly as claimed in of claims 1 through 6, **characterized in that** mutually cooperating detent elements (62, 66) are configured on the fuel tank tub (10) and on the tubular adapter (20) to join these components in snap-in manner.

8. Fuel tank filling assembly as claimed in one of claims 1 through 7, **characterized in that** the sealing lid (50) is fitted with a lateral arm (52) supported pivotably about an axis which runs parallel to the axis of the jar-like housing (30) and **in that** the arm (52) is fitted with a slot (54) engaged by a first drive segment of the actuation bush (40) whereas a second drive segment is nearly fixed in position in the support plate (36).

9. Fuel filling assembly as claimed in claim 8, **characterized in that** the drive segments are fitted with pins (56, 56a), one pin engaging the slot of the sealing lid (50) and the other pin engaging a hole (58) which allows limited displacement of the other pin.

10. Fuel filling assembly as claimed in either of claims 8 and 9, **characterized in that** the support plate (36) comprises an arcuate slot guiding the pin engaging the slot of the arm of the sealing lid (50).

## Patentansprüche

1. Kraftstoffeinfüllanordnung zum Füllen von Dieselkraftstoff in einen Fahrzeugtank, die durch die folgenden Merkmale definiert wird:
- ein geschlitzter Betätigungsring (40), der aus gefedertem Material hergestellt ist oder radial vorgespannt ist und mit einem parallel zur Ringachse verlaufenden Spalt versehen ist, umfasst einen Einführabschnitt, der sich zu dem Fahrzeugtank hin konisch verjüngt, wobei sein schmaler Querschnitt kleiner ist als der Querschnitt einer Dieselzapfpistole und gleich dem oder größer als der Querschnitt einer Benzinzapfpistole ist,
- der Betätigungsring (40) ist an seinem zu dem Kraftstofftank weisenden Ende auf mindestens einer Seite des Spalts mit einem Antriebssegment ausgestattet,
- ein topfförmiges Gehäuse (30), in dem der Betätigungsring (40) schwimmend konfiguriert ist, wobei der Außendurchmesser des Betätigungsrings in seinem entspannten Zustand kleiner ist als der Innendurchmesser des topfförmigen Gehäuses,
- eine Kraftstofftankmulde (10), die integral aus Kunststoff hergestellt ist und eine Vertiefung (26) aufweist,
- einen Verschlussmechanismus (50), der an dem zu dem Kraftstofftank weisenden Ende des Betätigungsrings (40) angebracht ist und dazu ausgeführt ist, in seiner geschlossenen Stellung einen Anschlag für eine eingeführte Zapfpistole zu bilden, und
- das Antriebssegment des Betätigungsrings (40) den Verschlussmechanismus in Eingriff nimmt, wodurch dieser Verschlussmechanismus aus der geschlossenen in die geöffnete Stellung bewegt wird, wenn der Betätigungsring durch die Dieselzapfpistole aufgeweitet wird, wobei der Verschlussmechanismus in seiner geschlossenen Stellung den Durchgang zum Tank verschließt,
**dadurch gekennzeichnet, dass** der Betätigungsring (40), das topfförmige Gehäuse (30) und der Verschlussmechanismus (50) in der Vertiefung (26) der Kraftstofftankmulde (10) angeordnet sind, wobei der Verschlussmechanismus (50) eine Öffnung (28) in der Vertiefung (26) gezielt sperrt oder freigibt, und dass die Anordnung einen rohrförmigen Adapter (20) zwischen der Kraftstofftankmulde (10) und einem Kraftstofftankeinfüllrohr umfasst, wobei der rohrförmige Adapter (20) an seinem zu der Mulde weisenden Ende mit einem federbelasteten Schließglied (24) versehen ist, das mittels einer Zapfpistole geöffnet werden soll.

2. Kraftstofftankeinfüllanordnung nach Anspruch 1, **dadurch gekennzeichnet, dass** eine schieberartige Verschlussklappe (50) am Boden der Vertiefung (26) gelagert ist, eine Lagerscheibe (36) sich am Boden der Vertiefung (26) abstützt, der Betätigungsring (40) zwischen der Lagerscheibe (36) und dem Boden der Vertiefung (26) angeordnet ist, wobei das topfförmige Gehäuse am Boden der Vertiefung (26) abgestützt ist.

3. Kraftstofftankeinfüllanordnung nach Anspruch 2, **dadurch gekennzeichnet, dass** die Lagerscheibe (36) in einer Ausnehmung des Flansches (32) des Gehäuses (30) festgelegt ist.

4. Kraftstofftankeinfüllanordnung nach Anspruch 2 oder 3, **dadurch gekennzeichnet, dass** der Flansch (36) passgenau in die Vertiefung (26) eingesetzt ist.

5. Kraftstofftankeinfüllanordnung nach einem der Ansprüche 2 bis 4, **dadurch gekennzeichnet, dass** durch die Vertiefung ein zylindrisches Segment der Kraftstofftankmulde (10) gebildet wird, um das zugekehrte Ende des rohrförmigen Adapters (20) aufzunehmen.

6. Kraftstofftankeinfüllanordnung nach einem der Ansprüche 1 bis 5, **dadurch gekennzeichnet, dass** Orientierungselemente (70, 72) am Adapter (20) und an der Lagerscheibe (36) vorgesehen sind, über welche der Adapter und die Lagerscheibe in einer vorbestimmten relativen Drehlage zusammengefügt werden können.

7. Kraftstofftankeinfüllanordnung nach einem der Ansprüche 1 bis 6, **dadurch gekennzeichnet, dass** an der Kraftstofftankmulde (10) und am rohrförmigen Adapter (20) zusammenwirkende Arretierungsabschnitte (62, 66) konfiguriert sind, um diese Komponenten rastend zusammenzufügen.

8. Kraftstofftankeinfüllanordnung nach einem der Ansprüche 1 bis 7, **dadurch gekennzeichnet, dass** die Verschlussklappe (50) einen seitlichen Arm (52) aufweist, der um eine Achse schwenkbar gelagert ist, die parallel zur Achse des topfförmigen Gehäuses (30) verläuft, und der Arm (52) einen Schlitz (54) aufweist, in den ein erstes Antriebssegment des Betätigungsrings (40) eingreift, während ein zweites Antriebssegment nahezu ortsfest in der Lagerscheibe (36) angeordnet ist.

9. Kraftstoffeinfüllanordnung nach Anspruch 8, **dadurch gekennzeichnet, dass** die Antriebssegmente mit Zapfen (56, 56a) versehen sind, wobei ein Zapfen im Schlitz der Verschlussklappe (50) eingreift und der andere Zapfen in ein Loch (58) eingreift, das eine begrenzte Bewegung des anderen Zapfens gestattet.

10. Kraftstoffeinfüllanordnung nach Anspruch 8 oder 9, **dadurch gekennzeichnet, dass** die Lagerscheibe (36) einen bogenförmigen Schlitz aufweist, durch den hindurch der Zapfen geführt ist, der in Eingriff mit dem Schlitz des Arms der Verschlussklappe (50) steht.

## Revendications

1. Ensemble de remplissage de carburant pour remplir un réservoir de véhicule avec du carburant diesel, défini par les caractéristiques suivantes :
- une douille d'actionnement fendue (40) fabriquée en matériau élastique ou étant précontrainte radialement, et pourvue d'un espace s'étendant parallèlement à l'axe de la douille, comprend une portion d'insertion s'effilant sous forme conique vers le réservoir de carburant du véhicule, sa section transversale étroite étant inférieure à la section transversale d'une buse de pompe de carburant diesel et étant supérieure ou égale à la section transversale d'une buse de pompe de carburant essence,
- la douille d'actionnement (40) est munie à son extrémité en regard du réservoir de carburant, d'un segment d'entraînement sur au moins un côté dudit espace,
- un logement en forme de bocal (30) dans lequel la douille d'actionnement (40) est configurée de manière à flotter, le diamètre extérieur de la douille d'actionnement dans son état relaxé étant inférieur au diamètre intérieur du boîtier en forme de bocal,
- un corps de réservoir de carburant (10) qui est fabriqué intégralement en plastique et qui présente un renfoncement (26),
- un mécanisme de fermeture (50) est monté à l'extrémité de la douille d'actionnement (40) en regard du réservoir de carburant et est prévu pour constituer, dans sa position fermée, une butée pour une buse de pompe de carburant insérée, et
- le segment d'entraînement de la douille d'actionnement (40) s'engage avec le mécanisme de fermeture, ce mécanisme de fermeture étant déplacé hors de la position fermée dans la position ouverte lorsque la buse de pompe à carburant diesel écarte la douille d'actionnement, le mécanisme de fermeture, dans sa position fermée, fermant le passage allant audit réservoir, **caractérisé en ce que** la douille d'actionnement (40), le boîtier en forme de bocal (30) et le mécanisme de fermeture (50) sont configurés dans le renfoncement (26) du corps de réservoir de carburant (10), le mécanisme de fermeture (50) bloquant ou libérant sélectivement une ouverture (28) dans le renfoncement (26), et **en ce que** l'ensemble comprend un adaptateur tubulaire (20) entre le corps de réservoir de carburant (10) et un tuyau de remplissage du réservoir de carburant, l'adaptateur tubulaire (20) étant muni à son extrémité en regard dudit corps d'un élément de fermeture chargé par ressort (24) qui sera ouvert au moyen d'une buse de pompe à carburant.

2. Ensemble de remplissage de réservoir de carburant selon la revendication 1, **caractérisé en ce qu'**un couvercle d'étanchéité coulissant (50) repose sur le fond du renfoncement (26), **en ce qu'**une plaque de support (36) repose sur le fond du renfoncement (26), la douille d'actionnement (40) étant configurée entre la plaque de support (36) et le fond du renfoncement (26), le boîtier en forme de bocal reposant sur le fond du renfoncement (26).

3. Ensemble de remplissage de réservoir de carburant selon la revendication 2, **caractérisé en ce que** la plaque de support (36) est fixée dans un dégagement de la bride (32) du boîtier (30).

4. Ensemble de remplissage de réservoir de carburant selon la revendication 2 ou 3, **caractérisé en ce que** la bride (32) est insérée étroitement dans le renfoncement (26).

5. Ensemble de remplissage de réservoir de carburant selon l'une quelconque des revendications 2 à 4, **caractérisé en ce que** ledit retrait constitue un segment cylindrique du corps de remplissage de carburant (10) pour recevoir l'extrémité en regard de l'adaptateur tubulaire (20).

6. Ensemble de remplissage de réservoir de carburant selon l'une quelconque des revendications 1 à 5, **caractérisé en ce que** des éléments de polarisation (70, 72) sont prévus sur l'adaptateur (20) et la plaque de support (36) au moyen desquels ledit adaptateur et ladite plaque de support peuvent être accouplés l'un à l'autre dans une position de rotation relative prédéterminée.

7. Ensemble de remplissage de réservoir de carburant selon l'une quelconque des revendications 1 à 6, **caractérisé en ce que** des éléments d'ergots coopérant mutuellement (62, 66) sont configurés sur le corps de remplissage de carburant (10) et sur l'adaptateur tubulaire (20) pour réunir ces composants par encliquetage.

8. Ensemble de remplissage de réservoir de carburant selon l'une quelconque des revendications 1 à 7, **caractérisé en ce que** le couvercle d'étanchéité (50) est muni d'un bras latéral (52) supporté de manière pivotante autour d'un axe qui s'étend parallèlement à l'axe du boîtier en forme de bocal (30) et **en ce que** le bras (52) est pourvu d'une fente (54) avec laquelle s'engage un premier segment d'entraînement de la douille d'actionnement (40) tandis qu'un deuxième segment d'entraînement est quasiment fixé en position dans la plaque de support (36).

9. Ensemble de remplissage de réservoir de carburant selon la revendication 8, **caractérisé en ce que** les segments d'entraînement sont munis de goupilles (56, 56a), une goupille s'engageant avec la fente du couvercle d'étanchéité (50) et l'autre goupille s'engageant avec un trou (58) qui permet un déplacement limité de l'autre goupille.

10. Ensemble de remplissage de réservoir de carburant selon l'une ou l'autre des revendications 8 et 9, **caractérisé en ce que** la plaque de support (36) comprend une fente arquée guidant la goupille s'engageant avec la fente du bras du couvercle d'étanchéité (50).
